(19) Europäisches Patentamt
European Patent Office
Office européen des brevets

(11) **EP 2 512 173 A1**

(12) **EUROPEAN PATENT APPLICATION**
published in accordance with Art. 153(4) EPC

(43) Date of publication:
**17.10.2012 Bulletin 2012/42**

(21) Application number: **10843729.4**

(22) Date of filing: **25.09.2010**

(51) Int Cl.:
***H04W 24/06*** (2009.01)

(86) International application number:
**PCT/CN2010/077283**

(87) International publication number:
**WO 2011/088689 (28.07.2011 Gazette 2011/30)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **19.01.2010 CN 201010004091**

(71) Applicant: **ZTE Corporation
Shenzhen, Guangdong 518057 (CN)**

(72) Inventors:
• **DING, Tiantian
Shenzhen
Guangdong 518057 (CN)**

• **GUO, Yang
Shenzhen
Guangdong 518057 (CN)**

(74) Representative: **Anderson, Angela Mary
Murgitroyd & Company
Immeuble Atlantis
55 Allée Pierre Ziller
Sophia Antipolis
06560 Valbonne (FR)**

(54) **METHOD AND APPARATUS FOR TESTING TOTAL ISOTROPIC SENSITIVITY IN MULTI-ANTENNA MIMO SYSTEM**

(57) The present invention discloses a method and an apparatus for testing Total Isotropic Sensitivity (TIS) in a multi-antenna Multiple Input Multiple Output (MIMO) system. The apparatus includes a base station simulator, a multipath fading channel simulator and a darkroom including a measuring antenna and a device under test placed in the darkroom. During the testing, the base station simulator generates transmitting signals of multiple transmitting antennas, and the transmitting signals have characteristic of orthogonal polarization and adopt Space Time Block Code or Space Frequency Block Code; the multipath fading channel simulator adds corresponding channel parameters and noise interference parameters to the transmitting signals, and transmits the transmitting signals which have been decayed to the measuring antenna in the darkroom to send the transmitting signals which have been decayed to the device under test; the device under test performs multi-antenna receiving to the transmitting signals, performs Maximum Ratio Combining on received signals, and acquires the Total Isotropic Sensitivity (TIS) according to the received signals which have been combined. In the present invention, the testing for the Total Isotropic Sensitivity (TIS) in the multi-antenna MIMO system can be achieved.

FIG. 3

**Description**

Technical Field

The present invention relates to the field of wireless communication technology, and particularly, to a method and an apparatus for testing Total Isotropic Sensitivity (TIS) in a multi-antenna Multiple Input Multiple Output (MIMO) system in the field of radiation performance test technology of wireless communication terminal products.

Background of the Related Art

With rapid development of the wireless communication technology, especially the rise of the 3rd Generation (3G), all kinds of wireless communication products need to have good transmitting and receiving performance to guarantee communication quality to provide better voice and data services for more users. Wherein, one of the important indexes for measuring radiation performance of wireless terminal devices is Total Radiated Power (TRP) and Total Isotropic Sensitivity (TIS, also called as Total Radiated Sensitivity (TRS) in certain literatures). TRP needs to be greater than a certain threshold value and TIS must be less than a certain threshold value. Thus it can guarantee that the devices have a good space radiation performance index.

Currently, domestic and international standard organizations and many operators all require that the wireless terminal devices need to have a space performance test for the wireless terminal devices being about to access to networks before accessing to networks, for example, *The test plan for mobile station OTA performance* made by the Cellular Telecommunication Industry Association (CTIA) standard organization. Wherein, TRP index and TIS index are explicitly defined that they must satisfy a certain limit value requirement.

After years of research, a method and an apparatus for testing radiation performance indexes of TIS and TRP of Over The Air (OTA) in a Single Input Single Output (SISO) system have already been extremely matured, especially in a GSM system. But now it is conducting the 3G and even the 4G such as the subsequent LTE ect., so the SISO system has been far from enough to satisfy demand. In a new wireless communication system with a high speed and high quality, a multi-antenna Multiple Input Multiple Output (MIMO) system is normally used. But there is no comprehensive scheme in testing for OTA of radiation characteristic of the wireless terminal devices in the MIMO system. As important measurement indexes in the OTA testing, TIS and TRP even need to be studied further to form a mature and perfect measurement scheme.

In the SISO system, definition of Total Isotropic Sensitivity (TIS) follows:

$$TIS = \frac{4\pi}{\oint \left[ \frac{1}{EIS_\theta(\Omega; f)} + \frac{1}{EIS_\varphi(\Omega; f)} \right] d\Omega}$$

wherein, $\Omega$ is an angle area entity corresponding to a direction, $f$ is a frequency, $\theta$ and $\varphi$ represent two polarizations which are orthogonal each other, and Effective Isotropic Sensitivity (EIS) is defined as available power of the output end of an antenna if a sensitivity threshold is reached under every Polarization.

TIS can be equivalently calculated using the following formula:

$$TIS \approx \frac{2XY}{\pi \sum_{x=0}^{X-1} \sum_{y=0}^{Y-1} \left[ \frac{1}{EIS_\theta(\theta_x, \varphi_y; f)} + \frac{1}{EIS_\varphi(\theta_x, \varphi_y; f)} \right] \sin(\theta_x)}$$

wherein, $X$ and $Y$ are the number of sampling points of measurement angles $\theta_x$ and $\varphi_y$.

Currently, in an OTA MIMO system, there is a simple method for testing OTA radiation performance of the Total Isotropic Sensitivity (TIS). The method performs a TIS test to each receiving link on a device under test respectively. This method is relatively simple, but there are several disadvantages as follows:

first, the method needs to open independent receiving links respectively, which not only needs an external control, but also has an inaccurate testing result.
second, since antenna mode and antenna matching mode are different, it is difficult to achieve disconnection for the antennas physically and independently.

Therefore, with respect to the multi-antenna MIMO system, how to realize a testing for Total Isotropic Sensitivity (TIS) becomes a technical problem required to be solved.

Summary of the Invention

The technical problem required to be solved by the present invention is to provide a method and an apparatus for testing Total Isotropic Sensitivity (TIS) in a multi-antenna Multiple Input Multiple Output (MIMO) system, to realize a test for TIS of the multi-antenna MIMO system.

In order to solve the above problem, the present invention presents an apparatus for testing Total Isotropic Sensitivity (TIS) of a multi-antenna Multiple Input Multiple Output (MIMO) system. The apparatus comprises a base station simulator, a multipath fading channel simulator and a darkroom comprising a measuring antenna and a device under test placed in the darkroom, wherein:

the base station simulator is configured to generate transmitting signals, which have characteristic of orthogonal polarization, of multiple transmitting antennas, and to send the transmitting signals to the multipath fading channel simulator;

the multipath fading channel simulator is configured to add corresponding channel parameters and noise interference parameters to the transmitting signals, and transmit the transmitting signals which have been decayed to the measuring antenna in the darkroom;

the measuring antenna is configured to send the transmitting signals which have been decayed to the device under test in the darkroom;

the device under test is configured to: perform multi-antenna receiving on the transmitting signals, perform Maximum Ratio Combining on the received signals, and acquire the Total Isotropic Sensitivity (TIS) according to the combined received signals.

In the above testing apparatus, the base station simulator is further configured to support Space Time Block Code and/or Space Frequency Block Code, and the transmitting signals which have been generated are signals adopting Space Time Block Code or Space Frequency Block Code.
In the above testing apparatus, the device under test is configured to be a wireless communication terminal device having function of multi-antenna receiving diversity, which supports Space Time Block Code and/or Space Frequency Block Code.
In the above testing apparatus, the multipath fading channel simulator is further configured to support simulating the channel parameters and noise interference parameters of a High Speed Downlink Packet Access (HSPA) system standard or a Long Term Evolution (LTE) system standard or a Long Term Evolution plus (LTE+) system standard, wherein, the channel parameters are channel matrix H.
The present invention further provides a method for testing Total Isotropic Sensitivity (TIS) in a multi-antenna Multiple Input Multiple Output (MIMO) system, which comprises:

a base station simulator generating transmitting signals, which have characteristic of orthogonal polarization, of multiple transmitting antennas;

a multipath fading channel simulator adding corresponding channel parameters and noise interference parameters to the transmitting signals, and transmitting the transmitting signals which have been decayed to a measuring antenna in a darkroom to send the transmitting signals which have been decayed to a device under test; and

the device under test performing multi-antenna receiving to the transmitting signals, performing Maximum Ratio Combining to received signals, and acquiring Total Isotropic Sensitivity (TIS) according to the received signals which have been combined.

In the above method, the base station simulator supports Space Time Block Code and/or Space Frequency Block Code, and the transmitting signals which have been generated are signals adopting Space Time Block Code or Space Frequency Block Code.
In the above method, the device under test is a wireless communication terminal device having function of multi-antenna receiving diversity, and the device under test supports Space Time Block Code and/or Space Frequency Block Code.

In the above method, the channel parameters are channel matrix H, and channel matrix H is channel matrix H of a High Speed Downlink Packet Access (HSPA) system standard or a Long Term Evolution (LTE) system standard or a Long Term Evolution plus (LTE+) system standard.

Based on the theory of Space Time Block Code or Space Frequency Block Code, the present invention presents a method and an apparatus for testing Total Isotropic Sensitivity (TIS) in a multi-antenna Multiple Input Multiple Output (MIMO) system, which adopts a method of combining the Space Time Block Code or Space Frequency Block Code with Maximum Ratio Combining to test the receiving sensitivity of a device under test. The method comprehensively considers the multi-antenna transmitting and multi-antenna receiving, so the receiving sensitivity obtained through the method is more accurate, convenient and economic than results measured from the method that adopts a single antenna to receive path signals and then combines them every time. The present invention needs not to make big changes to the original OTA testing method especially the darkroom but can complete the radiation performance OTA testing for the MIMO system more conveniently and accurately. It not only expands and consummates the OTA radiation performance testing of wireless terminal devices in the MIMO system, but also improves a shortage in the method that measures each link separately and then combines them to calculate the total radiation characteristic.

Brief Description of Drawings

The accompanying drawings are used to provide a further understanding of the present invention, to constitute a part of the present invention, and to explain the present invention together with the embodiments of the present invention, but not to constitute a limitation to the present invention. In the drawings:

FIG. 1 is a schematic diagram of a two-antenna transmitting diversity system.

FIG. 2 is a schematic diagram of a two-antenna transmitting and two-antenna receiving diversity system.

FIG. 3 is a block diagram of an apparatus for testing Total Isotropic Sensitivity (TIS) of radiation performance of wireless terminal devices.

FIG. 4 is a flow diagram of a method for testing Total Isotropic Sensitivity (TIS) of radiation performance of wireless terminal devices.

Preferred Embodiments of the Present Invention

In order to make the object, technical scheme and advantages of the present invention more clear, the present invention will be further described in detail in combination with the accompanying drawings below.

With respect to the problem that there is no perfect scheme for testing Over The Air (OTA) of wireless terminal devices in a multi-antenna Multiple Input Multiple Output (MIMO) system, especially no technical scheme for measuring Total Isotropic Sensitivity (TIS) in the related art, the present invention presents a method and an apparatus for testing the Total Isotropic Sensitivity (TIS) in the multi-antenna MIMO system.

The present invention has comprehensively considered the multi-antenna transmitting and multi-antenna receiving, in which multi-antenna transmitting diversity signals are generated through a base station simulator, decayed by a multipath fading channel simulator and then transmitted into the measuring antenna in a darkroom, then in the darkroom the measuring antenna sends the multi-antenna transmitting diversity signals to a device under test, the device under test performs multi-antenna receiving, performs Maximum Ratio Combining to multiple path signals which have been received, acquires receiving sensitivity TIS of each sampling point according to the received signals which have been combined, and finally gathers the Total Isotropic Sensitivity (TIS) which have been obtained. Wherein, multi-antenna transmitting signals and multi-antenna receiving signals are signals based on Space Time Block Code or Space Frequency Block Code.

A method for testing Total Isotropic Sensitivity of a multi-antenna MIMO system of the present invention comprises:

a base station simulator generating transmitting signals, which have characteristic of orthogonal polarization, of multiple transmitting antennas ;

a multipath fading channel simulator adding corresponding channel parameters and noise interference parameters to the transmitting signals, and transmitting the transmitting signals which have been decayed to a measuring antenna in a darkroom to send them to a device under test; and

the device under test performing multi-antenna receiving to the transmitting signals, performing Maximum Ratio Combining to received signals, and acquiring the Total Isotropic Sensitivity (TIS) according to the received signals which have been combined.

Wherein, the base station simulator supports Space Time Block Code and/or Space Frequency Block Code, and the transmitting signals generated by the base station simulator are signals adopting Space Time Block Code or Space Frequency Block Code.

The device under test is a wireless communication terminal device which has a function of multi-antenna receiving diversity, and it supports Space Time Block Code and/or Space Frequency Block Code.

The channel parameters are channel matrix H, and channel matrix H is channel matrix H of a High Speed Downlink Packet Access (HSPA) system standard or a Long Term Evolution (LTE) system standard or a Long Term Evolution plus (LTE+) system standard.

In the multi-antenna MIMO system of the present invention, it is assumed that the number of antennas of a transmitting terminal is $M(M \geq 2, M$ is a positive integer), the number of antennas of a receiving terminal is $N(N \geq 2, N$ is a positive integer), both Space Time Block Code (STBC) and/or Space Frequency Block Code (SFBC) are supported, and that the receiving terminal uses the method of Maximum Ratio Combining (MRC) to perform receiving. Based on an Alamouti system of the theory of Space Time Block Code or Space Frequency Block Code, it is assumed that there are M+1 signal sources S0, S1,......, SM respectively locating on different slots (or frequencies) and different antennas. Every signal source is orthogonal to each other in transmission.

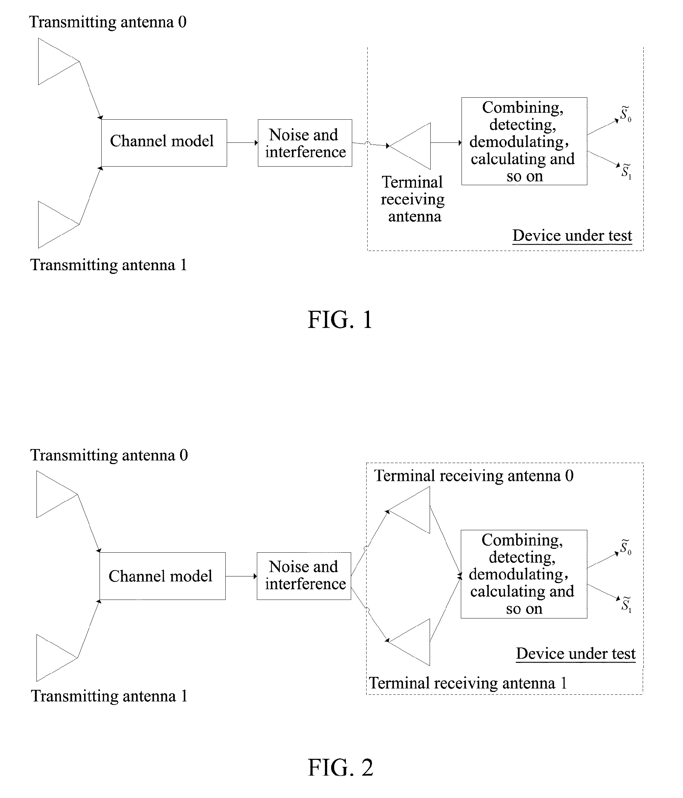

As shown in FIG. 1, it illustrates a schematic diagram of a two-antenna transmitting diversity system. Table 1 illustrates distribution situation of signals in the Alamouti system if there are 2 antennas.

Table 1: distribution situation of signals in the Alamouti system if there are 2 transmitting antennas

|  | Antenna 0 | Antenna 1 |
|---|---|---|
| Slot 0 | $S_0$ | $S_1$ |
| Slot 1 | $-S_1^*$ | $S_0^*$ |

This moment, if adopting mathematical expression for the channel model of two transmitting antennas, it's expressed as:

$$h_0(t) = \alpha_0 e^{j\theta_0} \qquad (1)$$

$$h_1(t) = \alpha_1 e^{j\theta_1}$$

The received signals at the moments of slot 0 and slot 1 can be expressed using the following formulas:

$$r_0 = h_0 s_0 + h_1 s_1 + n_0 \qquad (2)$$

$$r_1 = -h_0 s_0^* + h_1 s_0^* + n_1$$

wherein, $n_0$ and $n_1$ represent random received noise and interference in different slots.

The signals obtained after combination and then maximum likelihood detection are expressed by formula (3) as follows:

$$\widetilde{S}_0 = (\alpha_0^2 + \alpha_1^2)s_0 + h_0^* n_0 + h_1 n_1^* \qquad (3)$$

$$\widetilde{S}_1 = (\alpha_0^2 + \alpha_1^2)s_1 - h_0 n_1^* + h_1^* n_0$$

Through reasoning and calculation, we can obtain an expression that when there are N receiving antennas:

$$\widetilde{S}_0 = \sum_{n=0}^{N-1}(\alpha_{n0}^2 + \alpha_{n1}^2)s_0 + \sum_{n=0}^{N-1}(h_{n0}^* n_{n0} + h_{n1} n_{n1}^*)$$

$$\widetilde{S}_1 = \sum_{n=0}^{N-1}(\alpha_{n0}^2 + \alpha_{n1}^2)s_1 - \sum_{n=0}^{N-1}(h_{n0} n_{n1}^* - h_{n1}^* n_{n0})$$

(4)

The situation of Space Frequency Block Code is similar to the above description. That is, signals are received on different frequencies, and processing of Maximum Ratio Combining is executed.

Therefore, the present invention can adopt a method of combining Space Time Block Code or Space Frequency Block Code with the Maximum Ratio Combining to test the receiving sensitivity of the device under test.

After the combined signals are obtained according to formula (3) and formula (4), TIS can be obtained according to the calculation formula of the definition of TIS in the background of the related art, and it will not give unnecessary details here.

In the test for radiation performance of OTA, transmitting antenna 0 and transmitting antenna 1 are set, and the two measuring antennas have characteristics of vertical polarization and horizontal polarization. The device under test adopts Space Time Block Code (or Space Frequency Block Code). At the place of measuring antennas, signals of all the received path are combined. The receiving sensitivity measured through this method is more accurate and convenient than the results measured from a method of adopting a single antenna at a time to receive the path signals and then combining them.

As shown in FIG. 2, it illustrates a schematic diagram of a two-antenna transmitting and two-antenna receiving diversity system. It adopts two transmitting antennas and two receiving antennas here, and it can also be expanded to multiple transmitting antennas (e.g. M antennas) and multiple receiving antennas (e.g. N antennas). In the embodiment, the method of combining Space Time Block Code or Space Frequency Block Code with Maximum Ratio Combining is adopted to test the receiving sensitivity of the device under test. In the original OTA radiation performance, transmitting antenna 0 and transmitting antenna 1 are set, and the two measuring antennas have characteristics of vertical polarization and horizontal polarization. Meanwhile, the device under test adopts two antennas to receive signals.

Wherein, the channel model of the two-antenna transmitting and two-antenna receiving diversity system is shown in table 2 as follows:

Table 2: the channel situation when there are two transmitting antennas and two receiving antennas

|  | Transmitting antenna 0 | Transmitting antenna 1 |
|---|---|---|
| Receiving antenna 0 | $h_0$ | $h_2$ |
| Receiving antenna 1 | $h_1$ | $h_3$ |

The received signals of the two antennas are shown in table 3 as follows:

Table 3: the distribution situation of received signals if there are two transmitting antennas and two receiving antennas

|  | Receiving antenna 0 | Receiving antenna 1 |
|---|---|---|
| Slot 0 | $r_0$ | $r_2$ |
| Slot 1 | $r_1$ | $r_3$ |

Therefore the corresponding received signals can be expressed as:

The received signals at the moments of slot 0 and slot 1 can be expressed by the following equations:

$$r_0 = h_0 s_0 + h_1 s_1 + n_0$$

$$r_1 = -h_0 s_0^* + h_1 s_0^* + n_1$$

(5)

$$r_2 = h_2 s_0 + h_3 s_1 + n_2$$

$$r_3 = -h_2 s_1^* + h_3 s_0^* + n_3$$

wherein, $n_0$, $n_1$, $n_2$ and $n_3$ represent random received noise and interference in different slots.

The signals obtained after going through the combination and maximum likelihood detection are:

$$\widetilde{S}_0 = (\alpha_0^2 + \alpha_1^2 + \alpha_2^2 + \alpha_3^2)s_0 + h_0^* n_0 + h_1 n_1^* + h_2^* n_2 + h_3 n_3^* \qquad (6)$$

$$\widetilde{S}_1 = (\alpha_0^2 + \alpha_1^2 + \alpha_2^2 + \alpha_3^2)s_1 - h_0 n_1^* + h_1^* n_0 - h_2 n_3^* + h_3^* n_2$$

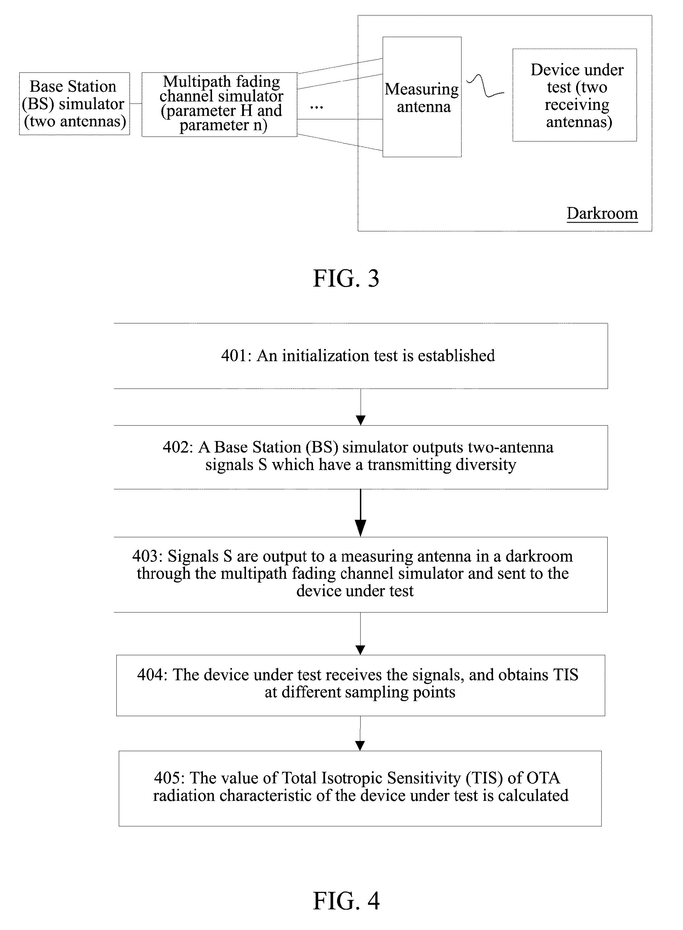

As shown in FIG. 3, it illustrates a schematic diagram of the apparatus for testing Total Isotropic Sensitivity (TIS) according to the present invention. The two transmitting antennas and two receiving antennas are taken as an example. In the embodiment, the darkroom can be kept unchanged based on the apparatus for testing the OTA radiation performance of the existing Single Input Single Output (SISO) system.

An apparatus for testing Total Isotropic Sensitivity (TIS) comprises:

a base station simulator which is used to generate transmitting signals, which have characteristic of orthogonal polarization, of multiple transmitting antennas, and to send the transmitting signals to a multipath fading channel simulator, wherein, the transmitting signals which have been generated adopt Space Time Block Code or Space Frequency Block Code;

the multipath fading channel simulator which is used to add corresponding parameters such as channel matrix H and noise interference n and so on to the transmitting signals, that is, to configure channel matrix H parameter and noise interference n parameter; and to transmit the transmitting signals which have been decayed to a measuring antenna in a darkroom;

the darkroom including the measuring antenna and a device under test, wherein, the measuring antenna is used to transmit the transmitting signals which have been decayed to the device under test in the darkroom, the device under test performs multi-antenna receiving to the transmitting signals, performs Maximum Ratio Combining to the received signals, and acquires Total Isotropic Sensitivity (TIS) according to the received signals which have been combined.

Wherein, the device under test should be a wireless communication terminal device having function of multi-antenna receiving diversity, it supports Space Time Block Code and/or Space Frequency Block Code, and there are two receiving antennas in the embodiment.

As shown in FIG. 4, it illustrates a flow diagram of the test for Total Isotropic Sensitivity (TIS) of radiation performance of wireless terminal devices. Take the device under test having two receiving antennas as example, it is described specifically as follows.

In step 401, an initialization testing is established.

The contents of initialization include:

with respect to different standards, selecting corresponding channel parameter H and noise interference parameter n. For example, with respect to a High Speed Downlink Packet Access (HSPA) system, a Long Term Evolution (LTE) system and a Long Term Evolution plus (LTE+) system and so on, corresponding channel parameter H and noise interference parameter n are required to be set, wherein, the specific setting can be set by the multipath fading channel simulator;

setting power of physical channel of downlink (DL);

switching on power supply of the device under test and keeping the battery power full, meanwhile, making the two antennas of the device under test open; the device under test supporting Maximum Ratio Combining Algorithm;

establishing a call connection, and setting a power control algorithm and a compress mode, to make the device under test enter a testing state.

In step 402, a Base Station (BS) simulator outputs two-antenna signals S which have a transmitting diversity, and supports Space Time Block Code and/or Space Frequency Block Code.

In step 403, signal S are inflicted channel parameter H and noise interference parameter n through the multipath fading channel simulator to form space multipath fading signals, output to a measuring antenna in a darkroom and sent to the device under test through the measuring antenna.

In step 404, the device under test receives the signals transmitted by the measuring antenna and obtains TIS at different sampling points. The selection of the sampling points required for TIS testing are not contents the present invention involves, so it will not give unnecessary details here.

Wherein, the device under test can perform testing in its own space, and can also perform testing under human hand model, human head mode and human body model.

In step 405, the value of Total Isotropic Sensitivity (TIS) of OTA radiation characteristic of the device under test is calculated. TIS is the total radiation sensitivity, which is generated by combining the results of every sampling point.

With regard to the situation that there are more than two transmitting antennas, it may refer to the embodiment of FIG. 4 and the above two transmitting antennas and two receiving antennas to execute. It will not give unnecessary details here.

Based on the theory of Space Time Block Code or Space Frequency Block Code, the present invention presents a method and an apparatus for testing Total Isotropic Sensitivity (TIS) in a multi-antenna MIMO system, which uses the method of combining Space Time Block Code or Space Frequency Block Code with Maximum Ratio Combining to test receiving sensitivity of a device under test. The method have comprehensively considered the multi-antenna transmitting and multi-antenna receiving, so the receiving sensitivity measured through the method is more accurate, convenient and economic than the results measured through a method adopting a single antenna at a time to receive path signals and then combining them.

It,s not required to make big changes to the original OTA testing method especially the darkroom in the present invention that the radiation performance OTA testing for the MIMO system can be completed more conveniently and accurately. It not only expands and consummates the OTA radiation performance testing of wireless terminal devices in the MIMO system, but also improves a shortage in the method that separately measures each link and then combines them to calculate the total radiation characteristic.

The above description is only the preferred embodiments of the present invention, and not used to limit the present invention. The present invention can have various modifications and changes for those skilled in the art. All the modifications, equivalent substitutions, and improvements, etc. made within the spirit and principle of the present invention shall fall into the scope of the claims appended to the present invention.

Industrial Applicability

The method and apparatus for testing Total Isotropic Sensitivity (TIS) in the multi-antenna Multiple Input Multiple Output (MIMO) system provided by the present invention use a combination of the Space Time Block Code or Space Frequency Block Code and the Maximum Ratio Combining to test receiving sensitivity of a device under test, comprehensively considers the multi-antenna transmitting and multi-antenna receiving. The receiving sensitivity obtained through the measurement of the method is more accurate, convenient and economic than the results measured from a method of using a single antenna to receive path signals and then performing a combination every time.

The present invention needs not to make big changes to the original OTA testing method especially the darkroom but can complete the radiation performance OTA testing for the MIMO system more conveniently and accurately. It not only expands and consummates the OTA radiation performance testing of wireless terminal devices in the MIMO system, but also improves a shortage in the method that measures each link separately and then combines them to calculate the total radiation characteristic.

**Claims**

1. An apparatus for testing Total Isotropic Sensitivity (TIS) in a multi-antenna Multiple Input Multiple Output (MIMO) system, comprising: a base station simulator, a multipath fading channel simulator and a darkroom comprising a measuring antenna and a device under test placed in the darkroom, wherein:

   the base station simulator is configured to generate transmitting signals, which have characteristic of orthogonal polarization, of multiple transmitting antennas, and to send the transmitting signals to the multipath fading channel simulator;
   the multipath fading channel simulator is configured to add corresponding channel parameters and noise interference parameters to the transmitting signals, and transmit the transmitting signals which have been decayed to the measuring antenna in the darkroom;
   the measuring antenna is configured to send the transmitting signals which have been decayed to the device under test in the darkroom;
   the device under test is configured to perform multi-antenna receiving on the transmitting signals, perform Maximum Ratio Combining on received signals, and acquire Total Isotropic Sensitivity (TIS) according to the received signals which have been combined.

2. The apparatus according to claim 1, wherein,
the base station simulator is further configured to support Space Time Block Code and/or Space Frequency Block Code, and the transmitting signals which have been generated are signals adopting Space Time Block Code or Space Frequency Block Code.

3. The apparatus according to claim 1, wherein,
the device under test is further configured to be a wireless communication terminal device having function of multi-antenna receiving diversity, which supports Space Time Block Code and/or Space Frequency Block Code.

4. The apparatus according to claim 1, wherein,
the multipath fading channel simulator is further configured to support simulating the channel parameters and noise interference parameters of a High Speed Downlink Packet Access (HSPA) system standard or a Long Term Evolution (LTE) system standard or a Long Term Evolution plus (LTE+) system standard, wherein, the channel parameters are channel matrix H.

5. A method for testing Total Isotropic Sensitivity (TIS) in a multi-antenna Multiple Input Multiple Output (MIMO) system, comprising:

a base station simulator generating transmitting signals, which have characteristic of orthogonal polarization, of multiple transmitting antennas;
a multipath fading channel simulator adding corresponding channel parameters and noise interference parameters to the transmitting signals, and transmitting the transmitting signals which have been decayed to a measuring antenna in a darkroom to send the transmitting signals which have been decayed to a device under test; and
the device under test performing multi-antenna receiving on the transmitting signals, performing Maximum Ratio Combining on received signals, and acquiring Total Isotropic Sensitivity (TIS) according to the received signals which have been combined.

6. The method according to claim 5, wherein,
the base station simulator supports Space Time Block Code and/or Space Frequency Block Code, and the transmitting signals which have been generated are signals adopting Space Time Block Code or Space Frequency Block Code.

7. The method according to claim 5, wherein,
the device under test is a wireless communication terminal device having function of multi-antenna receiving diversity, which supports Space Time Block Code and/or Space Frequency Block Code.

8. The method according to claim 5, wherein,
the channel parameters are channel matrix H, and the channel matrix H is channel matrix H of a High Speed Downlink Packet Access (HSPA) system standard or a Long Term Evolution (LTE) system standard or a Long Term Evolution plus (LTE+) system standard.

Transmitting antenna 0

Channel model

Noise and interference

Terminal receiving antenna

Combining, detecting, demodulating, calculating and so on

$\tilde{S}_0$

$\tilde{S}_1$

Device under test

Transmitting antenna 1

FIG. 1

Transmitting antenna 0

Channel model

Noise and interference

Terminal receiving antenna 0

Combining, detecting, demodulating, calculating and so on

$\tilde{S}_0$

$\tilde{S}_1$

Device under test

Terminal receiving antenna 1

Transmitting antenna 1

FIG. 2

| Base Station (BS) simulator (two antennas) | Multipath fading channel simulator (parameter H and parameter n) | ... | Measuring antenna | Device under test (two receiving antennas) |

Darkroom

## FIG. 3

401: An initialization test is established

402: A Base Station (BS) simulator outputs two-antenna signals S which have a transmitting diversity

403: Signals S are output to a measuring antenna in a darkroom through the multipath fading channel simulator and sent to the device under test

404: The device under test receives the signals, and obtains TIS at different sampling points

405: The value of Total Isotropic Sensitivity (TIS) of OTA radiation characteristic of the device under test is calculated

## FIG. 4

EP 2 512 173 A1

# INTERNATIONAL SEARCH REPORT

International application No.

PCT/CN2010/077283

### A. CLASSIFICATION OF SUBJECT MATTER

H04W24/06 (2009.01)i

According to International Patent Classification (IPC) or to both national classification and IPC

### B. FIELDS SEARCHED

Minimum documentation searched (classification system followed by classification symbols)

IPC: H04W,H04Q,H04B

Documentation searched other than minimum documentation to the extent that such documents are included in the fields searched

Electronic data base consulted during the international search (name of data base and, where practicable, search terms used)

CNKI,CPRS, EPODOC, WPI: sensitivity, simulator, base station/BS, chamber, shield, receive, TIS

### C. DOCUMENTS CONSIDERED TO BE RELEVANT

| Category* | Citation of document, with indication, where appropriate, of the relevant passages | Relevant to claim No. |
|---|---|---|
| A | CN1698296A (KT FREETEL CO LTD) 16 Nov. 2005(16.11.2005)<br><br>Page 3,line 11-page 5,line 6 of the description | 1-8 |
| A | CN101217754A (SHENZHEN SED WIRELESS COMM CO) 09 Jul. 2008(09.07.2008)<br><br>Page 1,line 22-page 2,line 29 of the description | 1-8 |
| A | US2008311871A1 (RESEARCH IN MOTION LTD) 18 Apr. 2007(18.04.2007)<br><br>Paragraphs [0026]-[0029] of the description | 1-8 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search<br>20 Nov. 2010（20.11.2010） | Date of mailing of the international search report<br>**30 Dec. 2010 (30.12.2010)** |
|---|---|
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>JIANG, Yan<br><br>Telephone No. (86-10)62411352 |

Form PCT/ISA /210 (second sheet) (July 2009)

12

## INTERNATIONAL SEARCH REPORT
Information on patent family members

| International application No. |
| --- |
| PCT/CN2010/077283 |

| Patent Documents referred in the Report | Publication Date | Patent Family | Publication Date |
| --- | --- | --- | --- |
| CN1698296A | 16.11.2005 | WO2004091124A1 | 21.10.2004 |
| | | KR20040088638A | 20.10.2004 |
| | | US2005272377A1 | 08.12.2005 |
| | | KR100531619B | 28.11.2005 |
| | | US7327984B2 | 05.02.2008 |
| | | INDELNP200403928E | 20.03.2009 |
| | | CN1698296B | 21.04.2010 |
| CN101217754A | 09.07.2008 | None | |
| US2008311871A1 | 18.04.2007 | EP2003800A1 | 17.12.2008 |
| | | EP2003800B1 | 15.07.2009 |
| | | DE602008000050E | 27.08.2009 |

Form PCT/ISA/210 (patent family annex) (July 2009)